# FASCICULE DE BREVET EUROPEEN

(11) **EP 1 049 405 B1**
(45) Date de publication et mention de la délivrance du brevet: **11.08.2004**
(21) Numéro de dépôt: 99911846.6
(22) Date de dépôt: 20.01.1999
(51) Int. Cl.: A61B 5/117, G06K 9/20, H05B 33/12

(54) **DISPOSITIF DE PRISE D'EMPREINTES DIGITALES**
VORRICHTUNG ZUR FINGERABDRUCKERFASSUNG
FINGERPRINTING DEVICE

(30) Priorité: 22.01.1998 FR 9800658; 05.01.1999 FR 9900026
(43) Date de publication de la demande: 08.11.2000
(73) Titulaire: SAGEM SA, 75016 Paris (FR)
(72) Inventeur: HALLIBERT, Pascal, F-75013 Paris (FR); LEHOMME, Francis, F-95290 L'Isle-Adam (FR); SCHMITT, Bernard, F-95000 Cergy (FR); POURCELOT, Pierre, F-93160 Noisy le Grand (FR)
(74) Mandataire: Loisel, Bertrand
(86) Numéro de dépôt international: PCT/FR1999/000104
(87) Numéro de publication internationale: WO 1999/037209

(56) Documents cités:
- EP-A- 0 308 162
- EP-A- 0 640 933
- US-A- 5 019 748
- PATENT ABSTRACTS OF JAPAN vol. 014, no. 352 (P-1085), 30 juillet 1990 & JP 02 126381 A (NEC KANSAI LTD), 15 mai 1990
- DATABASE WPI Section Ch, Week 8320 Derwent Publications Ltd., London, GB; Class L03, AN 1983-48904K XP002080114 & SU 942 684 A (AS AZERB PHYSICS),
- DATABASE WPI Section Ch, Week 8141 Derwent Publications Ltd., London, GB; Class J04, AN 1981-75251D XP002080115 & SU 797 657 A (AS AZERB PHYSICS),

## Description

La présente invention concerne les dispositifs de prise d'empreintes d'un tissu cutané présentant un réseau de saillies linéaires et de creux alternés. Elle trouve une application particulièrement importante, bien que non exclusive, dans la représentation d'empreintes digitale ou de la paume complète de la main, en vue de l'identification ou de la vérification.

On connaît déjà de nombreux dispositifs capables de fournir une image enregistrable du réseau de saillies sur la phalange terminale d'un doigt ou de plusieurs. Aucun de ces dispositifs ne met complètement à l'abri des fraudes. Les dispositifs utilisant un capteur optique fournissant l'image d'un doigt posé sur une face objet d'un prisme à réflexion totale peuvent difficilement discriminer l'empreinte d'un doigt vivant directement appliqué sur la face objet de celle d'un doigt étranger revêtu d'un moulage de l'empreinte à imiter, constitué par une pellicule mince très souple, suffisamment transparente pour que le capteur optique voit la couleur de la peau et ne puisse faire une discrimination par colorimétrie. L'ajout de moyens de photoplétysmographie, destinés à vérifier l'existence de pulsations cardiaques, complique le dispositif et allonge la durée de vérification.

On connaît également (US-A-4 336 998) un dispositif électrique comprenant un substrat isolant et transparent, une électrode fine et transparente et une couche sensible pour recevoir la pression du doigt. Cette couche sensible est prévue pour se déformer sous les saillies et on renforce ensuite le relief par l'action d'un champ électrique avant prise d'image. Un tel processus est peu sensible, peu discriminant et lent. De plus, il exige une source électrique fournissant une tension élevée.

On connaît également (SU-A-942684) une cellule électroluminescente utilisable pour amplifier la brillance d'une empreinte, comportant un substrat en verre, une électrode transparente, une couche luminescente et une couche de matériau semi-conducteur. Le doigt humain sert de seconde électrode.

Le document JP-A-2-126381 décrit un dispositif de prise d'empreinte qui comprend :
- un capteur optique ,
- une électrode mince transparente recouverte d'une couche diélectrique, disposée sur le capteur optique,
- des moyens pour établir une différence de potentiel entre les tissus appliqués sur la couche diélectrique électroluminescente et l'électrode transparente,
- des moyens de formation d'une image des tissus appliqués sur la couche diélectrique,
- une électronique de traitement de l'image fournie par les dits moyens de formation d'une image, permettant une identification ou une vérification par comparaison avec une ou plusieurs empreintes mémorisées.

La présente invention vise notamment à fournir un dispositif de prise d'empreintes de tissus cutanés répondant au mieux que ceux antérieurement connus aux exigences de la pratique. Elle vise notamment à fournir un dispositif ayant une capacité accrue de différencier l'empreinte d'un doigt vivant de celle d'un faux doigt ou d'un doigt mort.

Dans le dispositif selon l'invention le capteur optique a une face objet de réception de tissus dont l'empreinte est à prendre et l'électrode mince transparente recouverte d'une couche diélectrique électroluminescente est disposée sur une fraction seulement de la face objet. Par ailleurs, les moyens de formation d'image sont prévus pour fournir l'image des tissus appliqués sur l'ensemble de la face objet, y compris la fraction revêtue, et l' électronique de traitement de l'image est prévue pour vérifier la continuité dans l'image des saillies des tissus sur ladite fraction et sur le reste de la face objet.

Le capteur optique peut avoir de nombreuses constitutions connues, ayant un prisme à réflexion totale dont une surface constitue la face objet, une source de lumière éclairant la face objet à travers le prisme, et une caméra de prise d'image. Le capteur est par exemple du genre décrit dans le document EP-0 851 381.

La même caméra peut être prévue pour former simultanément l'image de ladite fraction et du reste de la face objet. La couche et son alimentation peuvent avoir par exemple la constitution décrite ci-après ou dans la demande de brevet FR-A-2 773 897.

On donnera en général à ladite fraction un emplacement et une surface tels que le "coeur" de l'empreinte, qui contient les points singuliers ou graphèmes les plus significatifs, se place contiguement à la couche sensible. Dans la pratique, la surface de la couche sensible constituera entre un quart et la moitié de la surface de l'image totale exploitée.

L'ensemble constitué par l'électrode mince transparente, la couche diélectrique électroluminescente, les moyens pour établir une différence de potentiel et les moyens de prise de vue peuvent constituer un dispositif utilisé de façon indépendante et constituer un dispositif de prise d'empreinte complet. Un tel dispositif, comprenant un substrat transparent et électriquement isolant portant une électrode mince transparente surmontée d'une couche sensible, est caractérisée en ce que la couche électroluminescente sensible est constituée d'un matériau diélectrique électroluminescent ou dans lequel sont dispersés des particules de matériau électroluminescent, constituant autant de luminophores, et en ce que le dispositif comporte également des moyens permettant d'établir une différence de potentiel entre les tissus destinés à être appliqués contre la couche sensible et l'électrode mince transparente.

Les caractéristiques ci-dessus, ainsi que d'autres, apparaîtront mieux à la lecture de la description qui suit de modes particuliers de réalisation de l'invention, donnés à titre d'exemple non limitatif.

La description se réfère aux dessins qui l'accompagnent, dans lesquels :
- la figure 1 est un schéma montrant la disposition des saillies d'une empreinte digitale ;
- la figure 2 est un schéma de dispositif hybride conforme à un aspect de l'invention;
- la figure 3 est un organigramme simplifié montrant les opérations effectuées pour la reconnaissance d'une empreinte ;
- la figure 4 montre, en coupe, une constitution possible d'un dispositif utilisant uniquement une couche électroluminescente tel que divulgué dans la demande de brevet FR-A-2 773 897 publiée le 23.07.99;
- la figure 5 montre une variante de réalisation décrite dans FR '897.

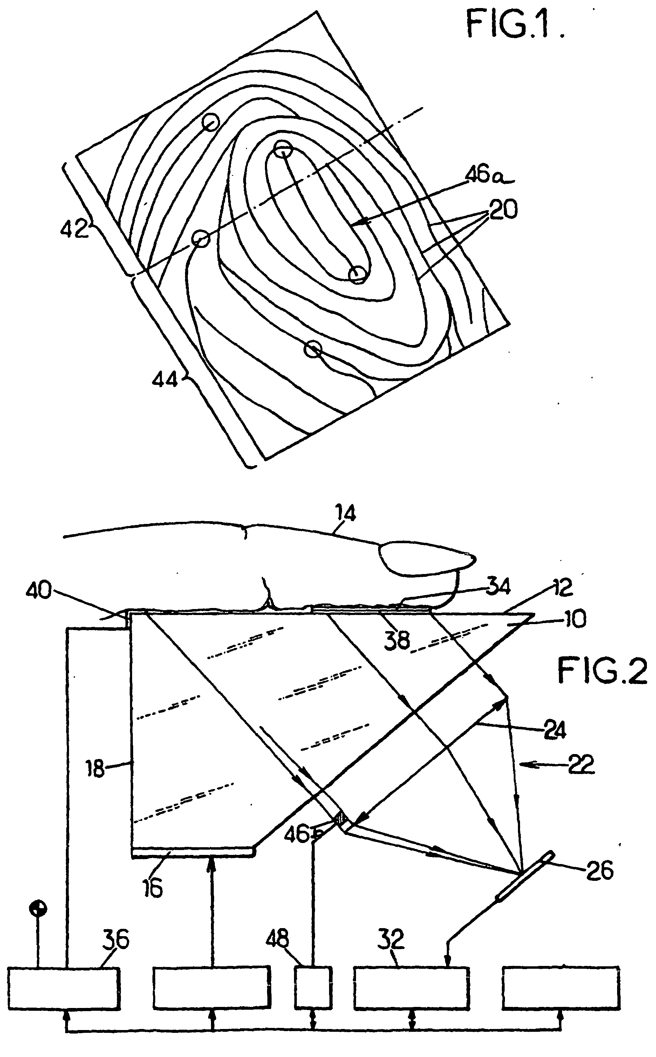

La partie terminale d'un doigt présente une peau qui n'est pas régulière, mais a une alternance de saillies ou "ridges" séparées par des creux ou sillons. Ces saillies sont irrégulières et présentent des bifurcations et des terminaisons. Sur la figure 1, quelques unes de ces terminaisons et de ces bifurcations sont indiquées par des cercles. Il existe de nombreux capteurs qui fournissent une image des saillies, sous forme de lignes plus épaisses que celles montrées en figure 1, et dans des tons de gris. Les procédés classiques de vérification s'effectuent par filtrage de l'image, détection des points singuliers ou graphèmes (terminaisons ou bifurcations) et comparaison avec une empreinte préalablement relevée et mémorisée, par exemple sur un support portable tel qu'une carte à puce, ou dans une base de données (cas de l'identification d'une personne parmi plusieurs).

La figure 2 montre un dispositif suivant un mode de réalisation de l'invention, reprenant des éléments d'un dispositif à détection optique vendu sous la marque déposée "MORPHOKIT" par SAGEM SA, Département Sécurité et Systèmes Morpho, Nanterre, France. Ce dispositif comprend un bloc transparent 10 présentant une face objet 12 sur lequel le sujet va appliquer un doigt 14 ou plusieurs. Le bloc 10 constitue un prisme à réflexion totale. Une face opposée à la face objet porte une source de lumière 16 qui peut notamment être constituée par une matrice à deux dimensions de diodes électroluminescentes éclairant la face objet. L'une des faces latérales 18 est revêtue d'une couche d'absorption de la lumière. La lumière réfléchie par la face objet 12 en dehors des emplacements d'appui des saillies 20 est recueillie par une caméra 22 schématisée sous forme d'une lentille 24 et d'un capteur bidimensionnel, tel qu'un capteur matriciel à état solide 26. Il est également possible d'utiliser une télécaméra.

Le dispositif est complété par un organe central de commande et de calcul qui provoque la séquence de mesure et exploite le signal provenant de la caméra 22. Cet organe commande l'éclairement de la source 16 et un circuit 32 de lecture du détecteur matriciel 26 et de prétraitement du signal.

Le dispositif montré en figure 2 met en oeuvre l'invention. Pour cela, une fraction de la face objet 12 est recouverte d'une couche sensible 34. Cette couche est constituée de matériau diélectrique électroluminescent ou d'un matériau diélectrique dans lequel sont dispersées des particules de matériau électroluminescent constituant des luminophores. Le dispositif comporte également des moyens 36 permettant d'établir une différence de potentiel entre les tissus destinés à être appliqués contre la couche sensible 34 et une électrode mince transparente 38 placée sous la couche sensible. Les deux bornes des moyens 36 sont reliées l'une à une électrode 40 sur laquelle va s'appuyer le doigt, l'autre à l'électrode mince transparente 38, par une liaison non représentée. Il est souhaitable que le matériau diélectrique ait une constante diélectrique élevée et un coefficient de transmission compatible avec la longueur d'onde émise par les luminophores. L'électrode transparente sera par exemple constituée par une couche mince de In₂O₃ ou d'oxyde d'indium et d'étain.

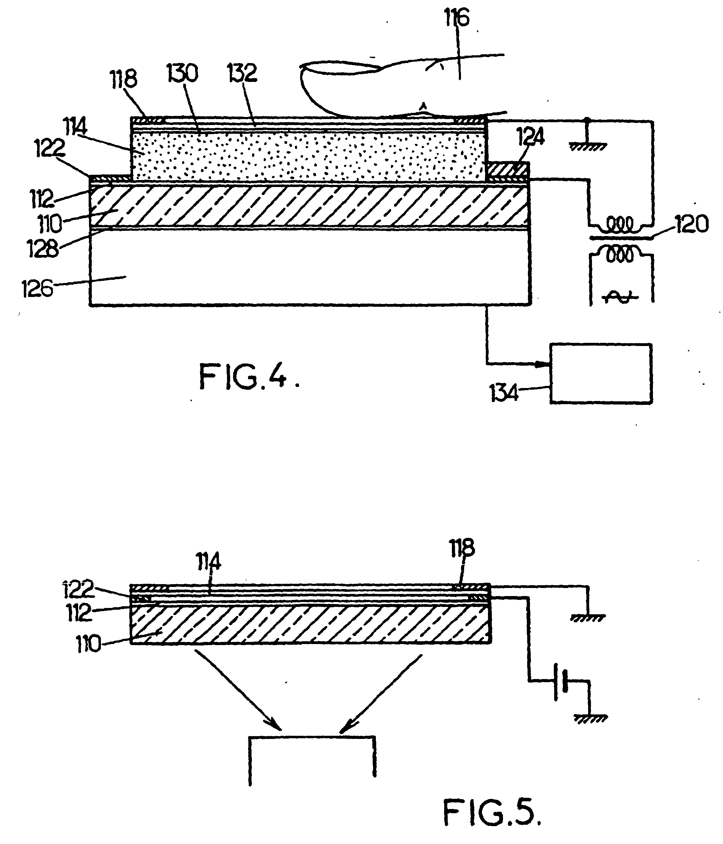

Plusieurs constitutions possibles de cette partie du dispositif sont décrites plus loin en faisant références aux figures 4 et 5.

Il est avantageux de donner à la couche sensible 34 un emplacement et une dimension tels que seule la partie terminale 42 de l'empreinte analysée se trouve sur elle. Le coeur 46a de l'empreinte, qui constitue la portion la plus significative, se trouve alors dans la zone résiduelle 44 de l'image exploitée.

Le dispositif est avantageusement complété par un capteur de réflectométrie 46b relié à un analyseur 48 permettant d'authentifier les tissus appliqués sur le capteur comme étant vivants, par comparaison du spectre colorimétrique réfléchi à des spectres de référence. Ce capteur et cet analyseur peuvent avoir la constitution décrite dans la demande de brevet français n° FR 2761179.

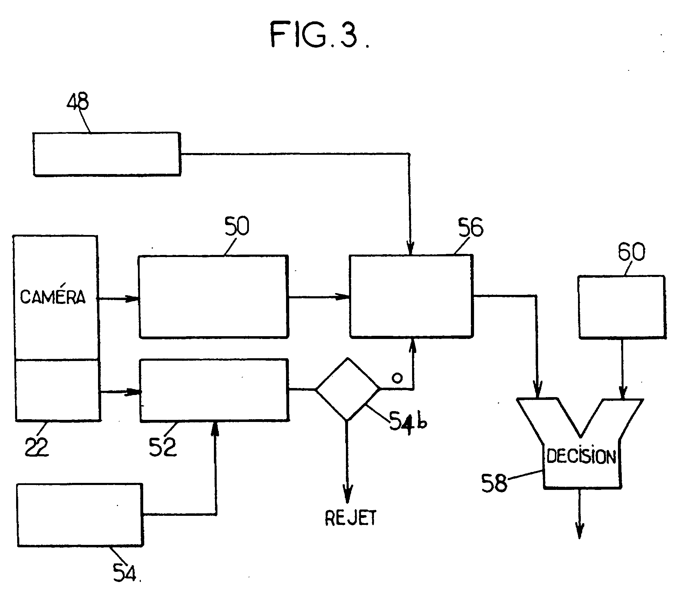

L'organigramme de fonctionnement du dispositif peut être celui schématisé en figure 3. La caméra 22 fournit les images qu'elle recueille à un module 50 d'analyse de l'image optique et un module 52 d'analyse de l'image obtenue par électroluminescence. Le module 52 peut être associé à un capteur 54 permettant de déterminer, par un procédé tel que la détection du pouls, qu'il s'agit d'un doigt vivant. La sortie de ce capteur constitue un signal d'autorisation pour le fonctionnement du module 52. Ce dernier fournit à un module de sélection, de constitution matérielle ou logicielle, les éléments permettant de déterminer si l'objet appliqué sur le capteur est bien un doigt réel. Chacun des modules 50 et 52 compare l'image qu'il reçoit à une échelle de gris pour déterminer le tracé des saillies, puis filtre l'image pour fournir en sortie une image binaire qui favorise la détection des points singuliers. Le module de sélection 54b transmet l'image, en cas de vérification positive, à un module de reconstitution 56 qui raccorde l'image traitée par le module 50 et l'image transmise par le module de sélection 54b. Enfin, un module de décision 58 effectue deux opérations :
- il vérifie la continuité entre les deux images ;
- en cas de succès, il compare la répartition et la nature des points significatifs de l'image avec soit une référence unique fournie par exemple par une carte à microprocesseur insérée dans le dispositif, soit une série de références stockée dans une mémoire 60 et il fournit le résultat.

Le capteur éventuel de colorimétrie 48 n'autorise la reconstitution de l'image par le module 56 qu'en cas de comparaison positive du spectre réfléchi avec un ou des spectres de référence, ou déclenche une alarme de fraude.

La séquence du procédé peut être différente de celle montrée en figure 3. De plus, le dispositif peut être complété pour commander automatiquement la tension appliquée à l'électrode mince afin d'équilibrer la brillance des images des zones 42 et 44.

On décrira maintenant de façon plus complète diverses constitutions possibles du dispositif à électroluminescence qui peut être incorporé au dispositif de la figure 2 ou utilisé indépendamment. Dans ce dispositif à électroluminescence, les luminophores peuvent être constitués par des poudres similaires à celles utilisées pour revêtir les écrans plats électroluminescents ou pour constituer les diodes électroluminescentes, émettant dans l'infra-rouge, le visible ou même l'ultra-violet, dispersées sous forme de micro-cristaux dans le matériau diélectrique. On peut notamment utiliser le sulfure de zinc dopé au cuivre. Il est souhaitable d'utiliser un matériau diélectrique ayant une constante diélectrique élevée, d'au moins 10, et ayant un coefficient de transmission élevé à la longueur d'onde émise par les luminophores. Les résines époxy, qui présentent une transmission acceptable lorsqu'elles sont en couche mince, peuvent être adoptées si leur coefficient diélectrique est supérieur à 10. Plus la constante diélectrique est élevée et plus il est possible de réduire la tension à partir de laquelle le luminophore commence à émettre (tension de seuil) pour une épaisseur donnée de couche. Il sera alors possible de réduire l'épaisseur de la couche sensible car moins sujette au claquage, avec l'avantage d'augmenter sa transmission de la lumière. On peut également utiliser des produits électroluminescents déposés en couche mince. On peut aussi utiliser certains polymères conducteurs conjugués ayant une électro-luminescence intrinsèque.

L'électrode transparente sera souvent constituée par une couche mince d'oxyde d'indium et d'étain, connu sous le nom de ITO, largement utilisé dans la fabrication des écrans plats, dont la technologie est bien maîtrisée et qui permet un accrochage satisfaisant des laques et résines.

Le capteur permettant de fournir un signal représentatif de l'image optique créé par la couche sensible peut être de l'un quelconque de nombreux types. On peut utiliser une caméra à matrice de sites photosensibles et optique de formation de l'image de la face arrière du substrat sur la matrice (caméra CCD ou CMOS par exemple) ; on peut également utiliser d'autres supports d'enregistrement tels qu'une pellicule photographique. Souvent la matrice de sites photosensibles, choisie pour être sensible au rayonnement des luminophores, pourra être directement accolée à la face arrière ou séparée d'elle par un amplificateur de lumière. Un filtre de couleur peut être placé entre la face arrière et le capteur pour réduire la sensibilité du dispositif à la lumière ambiante.

Le dispositif montré schématiquement sur la figure 4, où l'échelle n'est pas respectée pour plus de clarté, comporte un substrat 110 transparent et électriquement isolant recouvert par une électrode mince transparente 112 qui supporte à son tour une couche sensible 114 destinée à recevoir l'appui de l'organe dont l'empreinte est à prendre.

Le substrat 110 peut être constitué de différents produits ayant une transparence élevée dans le domaine de longueur d'onde utilisé. Dans le domaine visible, on utilisera généralement du verre. L'électrode mince transparente peut avoir une constitution identique à celle des contre-électrodes utilisées dans les écrans à cristaux liquides. Elle est alors constituée en oxyde d'indium et d'étain et elle a une épaisseur de quelques centaines de nanomètres.

La couche sensible 114 peut avoir diverses constitutions.

Dans un premier mode de réalisation, elle est constituée par un matériau diélectrique dans lequel sont dispersées des particules de matériau électroluminescent destinées à constituer des luminophores. On utilisera en règle générale une couche d'épaisseur inférieure à 50 µm, en un matériau diélectrique ayant un coefficient diélectrique supérieur à 20, qui permet d'adopter une tension de seuil basse inférieure à 40 Volts, efficace, compatible avec les normes de sécurité actuelles. Le matériau doit au surplus avoir un accrochage satisfaisant sur l'électrode mince 112.

Avec cette constitution de la couche sensible, le procédé de prise d'empreinte utilise une tension appliquée entre le doigt 116 et l'électrode 112. Pour cela, une solution commode, mais non exclusive, consiste à déposer un anneau ou une barrette de matériau conducteur 118 sur la partie périphérique de la couche sensible 114. Lors de l'application du doigt sur la couche sensible, le doigt s'appuie également sur l'anneau 118, qui peut être constitué par un dépôt métallique.

Les saillies du doigt 116 peuvent être regardés comme autant de condensateurs élémentaires avec l'électrode 112 et la couche sensible 114.

Lorsque les luminophores sont d'un type sensible au passage d'un courant, l'ensemble des "condensateurs élémentaires" est alimenté par une tension autre que continue. Dans le cas illustré sur la figure 4, la source de tension est constituée par un transformateur 120 dont le primaire est relié à une alimentation. L'une des bornes du secondaire, constituant point froid, est reliée à l'anneau 18 et est mise à la masse. L'autre extrémité du secondaire est reliée à un cadre conducteur 122 en communication avec l'électrode 112. Ce cadre peut être constitué par un simple dépôt métallique, recouvert par une barrette également métallique 124 dans la zone de liaison avec le secondaire du transformateur 120.

La tension appliquée entre l'électrode 112 et le doigt 116 dépend de la nature du courant et de sa fréquence. Dans le cas d'un courant alternatif sinusoïdal, on peut adopter une tension crête à crête de 20 à 100 V. Une fréquence de 1 à 50 kHz donne de bons résultats. Pour des raisons de sécurité, la tension acceptable est d'autant plus élevée que la fréquence est très élevée.
Il est également possible d'alimenter par un courant pulsé unipolaire, des trains d'impulsions rectangulaires, unipolaires ou sinusoïdales.
Au lieu de l'oxyde d'indium et d'étain In₂O₃/SnO₂, on peut envisager l'emploi d'oxyde d'indium pur ou contenant du zinc.

Le dispositif qui vient d'être décrit fournit une image à haute définition, par rayonnement des luminophores situés entre les appuis des saillies du doigt et l'électrode. Cette image est reprise par un capteur 126 qui peut être une télécaméra reliée à un ordinateur et permettant de visualiser l'image de l'empreinte sur le moniteur de l'ordinateur. Au lieu d'une caméra, il est possible d'utiliser un capteur à état solide directement appliqué contre la face inférieure du substrat 110. Un filtre de couleur 128, dont le pic de transmission correspond à la longueur d'onde du matériau électroluminescent, est avantageusement interposé entre la couche sensible et le capteur. Mais il n'est pas obligatoire.

Pour augmenter le rendement lumineux du dispositif et pour limiter la contribution de la lumière ambiante, la couche sensible 114 est avantageusement recouverte d'une pellicule 130 de matériau diélectrique réfléchissant ou diffusant la lumière et/ou d'une pellicule opaque 132. La pellicule réfléchissante peut être constituée notamment par du titanate de baryum, sous une épaisseur de l'ordre de 5 µm. La pellicule opaque 132 peut notamment être constituée par de l'oxyde de manganèse noir, sous une épaisseur de 5 à 20 µm.

Au lieu d'utiliser deux pellicules distinctes de protection, l'une diffusante et l'autre opaque, il est possible de réaliser une seule couche, avec une variation de composition au fur et mesure de la croissance.

Un procédé possible de fabrication d'un dispositif suivant l'invention est le suivant.

Sur un substrat en verre de quelques millimètres d'épaisseur, on dépose l'électrode transparente 112 ayant une épaisseur d'environ 300 nm. Ce dépôt peut notamment s'effectuer par pulvérisation et dépôt en phas vapeur (PVD) ou dépôt chimique en phase vapeur (CVD).

L'épaisseur du substrat 110 sera choisie en fonction de la surface de celui-ci. Pour un dispositif destiné à prendre l'empreinte d'un doigt, une épaisseur de 5 mm s'est révélée satisfaisante.

Sur l'électrode 112 on peut déposer :
- la couche sensible (par exemple laque contenant ZnS ou ZnSe dopé),
- le cas échéant une pellicule réfléchissante de TiBaO₃,
- éventuellement aussi, une couche opaque et de protection d'oxyde de manganèse,
- l'anneau 118 de contact avec le doigt.

Pour prendre l'empreinte d'un doigt, ce dernier est posé à plat sur la couche sensible ou la pellicule de protection, comme indiqué sur la figure 4, et une tension alternative est appliquée. Le capteur est mis en oeuvre pour fournir une représentation de l'image à un système informatique de traitement 134.

Le dispositif permet de différencier le doigt d'un être vivant d'un moulage et ainsi d'éviter des fraudes consistant à appliquer un tel moulage sur le dispositif d'un système d'accès à un lieu protégé. En effet, le moulage présente des caractéristiques électriques différentes de celles du doigt humain.

Il faut également remarquer que le dispositif permet de vérifier qu'un doigt vivant a été appliqué. En effet, le pouls provoque une variation cyclique de l'image, les points ou traits lumineux changeant d'intensité au rythme du pouls. Le système informatique 134 peut être constitué de façon à vérifier l'existence de cette variation.

Dans un autre mode (figure 5), le dispositif peut être prévu pour être alimenté en courant continu. Dans ce cas le substrat 110 porte encore une électrode mince transparente 112 de quelques centaines de nanomètres d'épaisseur. Cette électrode, généralement en ITO, peut être constituée par pulvérisation et dépôt en phase vapeur ou PVD, ou par dépôt chimique en phase vapeur, ou CVD, c'est-à-dire par l'un des procédés couramment dénommés technologie des couches minces.

La couche 114 sera généralement plus mince que dans le cas de la figure 4 et comportera une teneur élevée en matériau électroluminescent. On peut notamment utiliser une couche 114 constituée de cristaux en matériau tel que le sulfure de zinc dopé au cuivre et au manganèse avec comme liant une laque ayant un coefficient diélectrique élevé.

Les pellicules portées par la couche sensible 114 peuvent avoir la même constitution que dans le cas de la figure 4. Etant donné la faible épaisseur de la couche sensible, une tension continue de l'ordre de 10 V donne généralement des résultats satisfaisants. Lorsque cette tension est appliquée, les luminophores compris dans les volumes délimités par les saillies d'un doigt appliqué sur le dispositif émettent sous l'action du champ électrique dû à la tension appliquée entre les saillies et l'électrode 112. La lumière diffusée par la couche sensible 114 peut être reprise, à travers le substrat 110, par un capteur tel qu'une caméra reliée à un ordinateur de visualisation et d'exploitation de l'empreinte par des logiciels de traitement d'image.

Dans un autre mode de réalisation encore, la couche sensible est composite et formée d'une zone centrale mince de matériau luminophore, par exemple de sulfure de zinc dopé au cuivre, recouverte sur les deux faces d'une pellicule diélectrique fine. Dans ce cas, le substrat en verre porte encore une électrode, par exemple en ITO, dont l'épaisseur peut être d'environ 300 nm. L'électrode porte la couche sensible composite, formée par une première pellicule en diélectrique, de quelques centaines de nanomètres, une couche mince électroluminescente, d'épaisseur par exemple approximativement double de celle de la pellicule et une deuxième pellicule diélectrique ayant la même constitution que la première couche diélectrique. Une couche de protection, par exemple en oxyde de manganèse, peut être déposée sur la couche sensible. Les pellicules constitutives de la couche sensible peuvent encore être réalisées par pulvérisation et dépôt en phase vapeur ou par dépôt chimique en phase vapeur.

## Revendications

1. Dispositif de prise d'empreintes de tissus cutanés comprenant :
- un capteur otique (10) ayant une face objet (12) de réception de tissus dont l'empreinte est à prendre,
- des moyens (22) de formation d'une image des tissus appliqués sur la face objet,
- une électrode mince transparente recouverte d'une couche diélectrique électroluminescente (34) disposée sur une fraction seulement de la face objet,
- une électronique de traitement de l'image fournie par les moyens de formation d'une image, permettant une identification ou une vérification par comparaison avec une ou plusieurs empreintes mémorisées, lesdits moyens (22) de formation d'image étant prévus pour fournir l'image des tissus appliqués sur l'ensemble de la face objet, y compris la fraction revêtue, et ladite électronique de traitement de l'image étant prévue pour vérifier la continuité dans l'image des saillies des tissus sur ladite fraction et sur le reste de la face objet,
- des moyens (36) pour établir une différence de potentiel entre les tissus appliqués sur la couche diélectrique et l'électrode transparente.

2. Dispositif selon la revendication 1, **caractérisé en ce que** le capteur optique comporte un prisme à réflexion totale dont une surface constitue la face objet, une source de lumière (16) éclairant la face objet à travers le prisme, et une caméra de prise d'image.

3. Dispositif selon la revendication 2, **caractérisé en ce que** la même caméra forme simultanément l'image de ladite fraction et celle du reste de la face objet.

4. Dispositif selon l'une quelconque des revendications précédentes, **caractérisé en ce que** ladite fraction a un emplacement et une surface tels que le coeur de l'empreinte d'un doigt se place contiguement à la couche sensible.

5. Dispositif selon l'une quelconque des revendications précédentes, **caractérisé en ce que** les moyens de formation d'image donnent à l'image de la fraction de la face objet une surface qui constitue entre le quart et la moitié de la surface de l'image totale exploitée.

6. Dispositif selon l'une quelconque des revendications précédentes, **caractérisé en ce que** l'électronique de traitement comprend un module (50) d'analyse de l'image optique et un module (52) d'analyse de l'image obtenue par électroluminescence ces dits modules d'analyse fournissant des images binaires à un module (56) de reconstitution par raccordement des images traitées par lesdits modules d'analyse.

7. Dispositif selon la revendication 6, **caractérisé en ce qu'**il comprend de plus un capteur (54) permettant de vérifier qu'il s'agit d'un tissu vivant et de fournir un signal d'autorisation pour le fonctionnement du module (52) d'analyse de l'image obtenue par électroluminescence sur la fraction de la face objet.

8. Dispositif selon l'une quelconque des revendications précédentes, **caractérisé en ce que** la couche électroluminescente est constituée d'un matériau diélectrique dans lequel sont dispersées des particules de matériau électroluminescent, constituant autant de luminophores.

9. Dispositif selon la revendication 8, **caractérisé en ce que** les luminophores sont constitués par des poudres électroluminescentes émettant dans l'infra-rouge, le visible ou l'ultra violet, dispersées sous forme de micro-cristaux dans le matériau diélectrique.

10. Dispositif selon la revendication 8 ou 9, **caractérisé en ce que** le matériau diélectrique a une constante diélectrique d'au moins 10 et un coefficient de transmission élevé à la longueur d'onde émise par les luminophores.

11. Dispositif selon l'une quelconque des revendications 1 à 10, **caractérisé en ce que** les moyens d'établissement d'une différence de potentiel comprennent un anneau ou barrette de matériau conducteur (118) sur la partie périphérique de la couche électroluminescente sensible (114), destiné à entrer en contact avec les tissus.

## Patentansprüche

1. Vorrichtung zum Abnehmen von Hautgewebeabdrücken, umfassend:
- einen optischen Aufnehmer (10) mit einer Objektseite (12) zum Auflegen von Geweben, deren Abdruck abzunehmen ist,
- Mittel (22) zur Bildung eines Bilds der auf die Objektseite aufgelegten Gewebe,
- eine dünne transparente, mit einer dielektrischen elektrolumiszenten Schicht bedeckte Elektrode (34), wobei diese Elektrode nur auf einem Teil der Objektseite angeordnet ist,
- eine Elektronik zur Verarbeitung des von den Mitteln zur Bildung eines Bilds gelieferten Bilds, die eine Identifizierung oder eine Prüfung durch Vergleich mit einem oder mehreren gespeicherten Abdrücken gestattet, wobei die Mittel (22) zur Bildung eines Bilds vorgesehen sind, um das Bild der Gewebe zu liefern, die auf die gesamte Objektseite einschließlich des bedeckten Teils aufgelegt sind, und die Elektronik zur Verarbeitung des Bilds vorgesehen ist, um die Kontinuität der Erhebungen der Gewebe im Bild auf diesem Teil und auf der restlichen Objektseite zu prüfen,
- Mittel (36) zur Herstellung einer Potentialdifferenz zwischen den auf die dielektrische Schicht aufgelegten Geweben und der transparenten Elektrode.

2. Vorrichtung nach Anspruch 1, **dadurch gekennzeichnet, daß** der optische Aufnehmer ein totalreflektierendes Prisma, von dem eine Fläche die Objektseite bildet, eine die Objektseite durch das Prisma hindurch beleuchtende Lichtquelle (16) und eine Kamera zur Bildaufnahme aufweist.

3. Vorrichtung nach Anspruch 2, **dadurch gekennzeichnet, daß** dieselbe Kamera gleichzeitig das Bild dieses Teils und das der restlichen Objektseite bildet.

4. Vorrichtung nach einem der vorhergehenden Ansprüche, **dadurch gekennzeichnet, daß** dieser Teil eine solche Lage und eine solche Fläche besitzt, daß der Kern des Abdrucks eines Fingers an die empfindliche Schicht angrenzend zu liegen kommt.

5. Vorrichtung nach einem der vorhergehenden Ansprüche, **dadurch gekennzeichnet, daß** die Mittel zur Bildung eines Bilds dem Bild des Teils der Objektseite eine Fläche geben, die zwischen einem Viertel und der Hälfte der Fläche des gesamten ausgewerteten Bilds ausmacht.

6. Vorrichtung nach einem der vorhergehenden Ansprüche, **dadurch gekennzeichnet, daß** die Verarbeitungselektronik ein Modul (50) zur Analyse des optischen Bilds und ein Modul (52) zur Analyse des durch Elektrolumineszenz erhaltenen Bilds aufweist, wobei diese Analysemodule binäre Bilder einem Modul (56) zur Wiederherstellung durch Verbinden der durch diese Analysemodule verarbeiteten Bilder liefern.

7. Vorrichtung nach Anspruch 6, **dadurch gekennzeichnet, daß** sie außerdem einen Aufnehmer (54) aufweist, der es gestattet, zu prüfen, ob es sich um ein lebendes Gewebe handelt, und ein Zulassungssignal für den Betrieb des Moduls (52) zur Analyse des durch Elektrolumineszenz auf dem Teil der Objektseite erhaltenen Bildes zu liefern.

8. Vorrichtung nach einem der vorhergehenden Ansprüche, **dadurch gekennzeichnet, daß** die elektrolumineszente Schicht aus einem dielektrischen Werkstoff besteht, in dem Teilchen aus elektrolumineszentem Werkstoff verteilt sind, die ebensoviel Luminophore bilden.

9. Vorrichtung nach Anspruch 8, **dadurch gekennzeichnet, daß** die Luminophore aus elektrolumineszenten Pulvern bestehen, die im Infrarot, im sichtbaren Licht oder im Ultraviolett senden und in Form von Mikrokristallen in dem dielektrischen Werkstoff verteilt sind.

10. Vorrichtung nach Anspruch 8 oder 9, **dadurch gekennzeichnet, daß** der dielektrische Werkstoff eine Dielektrizitätskonstante von mindestens 10 und einen hohen Übertragungskoeffizienten bei der von den Luminophoren gesendeten Wellenlängen hat.

11. Vorrichtung nach einem der Ansprüche 1 bis 10, **dadurch gekennzeichnet, daß** die Mittel zur Herstellung einer Potentialdifferenz einen Ring oder eine Leiste (118) aus einem leitenden Werkstoff auf dem Umfangsteil der empfindlichen elektrolumineszenten Schicht (114) aufweisen, der bzw. die dazu bestimmt ist, mit den Geweben in Kontakt zu kommen

## Claims

1. A device for imaging prints of skin tissues, comprising:
- an optical sensor (10) having an object face (12) for receiving tissue whose print is to be taken,
- means (22) for imaging the tissues pressed onto the object face,
- a transparent thin electrode covered with an electroluminescent dielectric layer (34), disposed only on part of the object face,
- electronic means for processing the image delivered by the image means, enabling identification or verification by comparison with one or a plurality of stored prints, said means (22) for imaging the tissues being providing for the image of tissues pressed on the whole object face, including the part covered, and the said electronic means for processing the image being providing for verifying in the image the continuity of the ridge of tissues on said part and on the balance of the object face.
- means (36) for establishing a voltage difference between the tissues to be applied on to the dielectric layer and the transparent electrode,

2. A device according to claim 1, **characterized in that** the optical sensor comprises a total reflection prism, a surface of which constitutes the object face, a light source (16) lighting the object face through the prism and an image grabbing camera.

3. A device according to claim 2, **characterized in that** the same camera simultaneously forms images of said part and of the balance of the object face.

4. A device according to anyone of the preceding claims, , **characterized in that** said part hase a position and an area such that the core of a finger print is adjacent to the sensitive layer.

5. A device according to any one of the preceding claims, **characterized in that** the image means give to the image of the part of the object face an area which is between one fourth and one half of the area of the full processed image.

6. A device according to any one of the preceding claims, **characterized in that** a processing electronic circuit comprise a module (50) for analysing the optic image and a module (52) for analysing the image resulting from electroluminescence, said analysis module delivering binary images to a module (56) for reconstructing the images processed by said analysis modules by connecting them.

7. A device according to claim 6, **characterized in that** it further comprise a sensor (54) for verifying a living tissue is involved and for delivering an authorization signal for operation of the module (52) which analyses the image obtained by electroluminescence on part of the object face.

8. A device according to anyone of the preceding claims, **characterized in that** the electroluminescent layer consists of a dielectric material in which particles electroluminescent matter are dispersed and constitute as many luminophores.

9. A device according to claim 8, **characterized in that** the luminophores consist of electroluminescent particles dispersed as micro-crystals in the dielectric material and generating IR, visible ou UV light.

10. A device according to claims 8 or 9, **characterized in that** the dielectric material has a dielectric coefficient of at least 10 and a transmission coefficient which is high for the wave length emitted by the luminophores.

11. A device according to any one of claims 1-10, **characterized in that** the means for applying a voltage difference comprise a ring or bar of electrically conducting material (118) on a peripheral portion of the electroluminescent layer (114) arranged for contact with the tissue.
